# EUROPEAN PATENT APPLICATION

(11) **EP 4 250 111 A1**
(43) Date of publication of application: **27.09.2023**
(21) Application number: 22163929.7
(22) Date of filing: 23.03.2022
(51) Int. Cl.: G06F 9/50, G06Q 30/06

(54) **METHOD AND SYSTEM FOR COLLABORATIVE SHARING OF INDUSTRIAL HARDWARE RESOURCES**

(71) Applicant: Siemens Aktiengesellschaft, 80333 München (DE)
(72) Inventor: Krautwurm, Florian, 94034 Passau (DE); Latharani Nataraja, Gowri, 81737 München (DE); Tritchkov, Ivan, 91058 Erlangen (DE)
(74) Representative: Siemens Patent Attorneys

(57) **Abstract**

A computer-implemented method and system for collaborative sharing of industrial hardware resources (7) between users of a user group, wherein the method comprises the steps of: receiving (S1) by a web application (2) inquiry messages from client devices (5) of searching users indicating hardware resources (7) required by searching users of the user group; receiving (S2) by the web application (2) availability messages indicating hardware resources (7) available by users of the user group owning the available hardware resources (7). comparing (S3) by the web application (2) the required hardware resources (7) with the available hardware resources (7) to identify matching hardware resources (7) as matching results; notifying (S4) the searching user and the owning user of a matching hardware resource (7) about the matching result; and providing (S5) the searching user with access to use or test the matching hardware resource (7) if the searching user and the owning user indicate consent to provide the access.

## Description

The invention relates to a computer-implemented method and system for collaborative sharing of industrial hardware resources between users of a user group.

Organizations such as corporations can comprise a plurality of heterogeneous hardware resources. Hardware resources can comprise a huge variety of different types of hardware resources including IT assets or manufacturing machines. IT assets may for instance comprise further user equipment devices such as laptops, desktop devices or accessories such as keyboards, computer mouses, augmented reality, AR, devices or virtual, VR, devices. IT hardware resources may also include network hardware resources such as servers, bridges or routers. Besides the multiple IT assets, a corporation may also comprise manufacturing machines to produce or assemble components such as CNC drilling machines or three-dimensional printers. The available hardware resources can be widespread over a plurality of different production sites or research and development laboratories. Further, the user equipment devices can be in the possession of a variety of different users with different qualifications. Mobile user equipment devices can be used at the working place of the user or when the user is working at home. Because of the multiple IT and production assets, it is hardly possible to keep track of the availability and location of available hardware resources of users belonging to a specific user group such as employees of a company. Conventional centralized asset tracking applications are not able to track frequent changes in the availability of a variety of different hardware resources and cannot in particular accommodate temporary hardware resource borrowing between different users of the user group. Typically, a huge amount of hardware resources belonging to users of a corporation remain unused for significant time periods because the users do not require them for the assigned working tasks or for other reasons such as parental leave or holidays. On the other hand, other users may have an urgent need for specific hardware resources to perform their working task without any possibility to get access to these hardware resources. Accordingly, often hardware resources which are already available within an organization are acquired without awareness that these hardware resources are already available within the organization.

Accordingly, it is an object of the present invention to provide a method and system which allows for collaborative sharing of industrial hardware resources between users of a user group to make efficient use of available industrial hardware resources.

This object is achieved according to a first aspect of the present invention by a computer-implemented method comprising the features of claim 1.

The invention provides according to the first aspect a computer-implemented method for collaborative sharing of industrial hardware resources between users of a user group, the method comprising the steps of:
receiving by a web application inquiry messages from client devices of searching users indicating hardware resources required by searching users of the user group,
receiving by the web application from client devices of hardware resource owning users or from software agents of industrial hardware resources availability messages indicating hardware resources available at users of the user group owning the available hardware resources,
comparing by the web application the required hardware resources with the available hardware resources to identify matching hardware resources as matching results,
notifying the client device of the searching user and the client device of the owning user of a matching hardware resource about the matching result, and
providing access to use or test the matching hardware resource if the client device of the searching user and the client device of the hardware owning user indicate consent to provide the hardware resource access to the web application.

An advantage of the computer-implemented method according to the first aspect of the present invention resides in that client device of an owning user and a client device of a searching user can collaborate directly with each other to provide access to a required industrial hardware resource without involving third parties and without involving a complicated bureaucratic process. Consequently, the computer-implemented method for collaborative sharing of industrial hardware resources is very efficient and fast and can be easily handled by means of the client devices the involved users without requiring a specific teaching or training for the users.

A further advantage of the computer-implemented method for collaborative sharing of industrial hardware resources between client devices of users listed in a stored user group list is that the computer-implemented method creates automatically transparency of hardware resources availability within a closed group of users.

In a possible embodiment of the computer-implemented method according to the first aspect of the present invention, the web application receives an availability message provided by a software agent installed in an industrial hardware resource or installed on an edge device connected through an interface to an industrial hardware resource and/or from a client device of a user owning the industrial hardware resource.

This has the advantage that a plurality of different kinds hardware resources can be shared using the computer implemented method according to the present invention.

In a further possible embodiment of the computer-implemented method according to the first aspect of the present invention, the availability message is generated automatically by the installed software agent if at least one predefined availability condition is fulfilled by the associated industrial hardware resource.

This provides the advantage that the matching of hardware resources is accelerated.

In a further possible embodiment of the computer-implemented method according to the first aspect of the present invention, the availability condition comprises excess of a predefined time limit where the respective industrial hardware resource has not been sufficiently used by the user owning the respective industrial hardware resource.

This provides the advantage that the total utilization of all available hardware resources is increased.

In a further possible embodiment of the computer-implemented method according to the first aspect of the present invention, the availability message provided by the software agent installed in the industrial hardware resource or installed on the edge device connected through an interface to the industrial hardware resource comprises a status indication indicating a hardware resource availability status of the respective hardware resource.

The reduces the required data processing time of the hardware resource matching.

In a further possible embodiment of the computer-implemented method according to the first aspect of the present invention, the inquiry message and/or the availability message comprise hardware related metadata which specify hardware characteristics of the respective industrial hardware resource and/or user related metadata which specify characteristics of the users of the client devices and/or which indicate a hardware resource availability status of the respective industrial hardware resource.

This allows for a more accurate, robust and precise matching of available hardware resources.

In a possible embodiment of the computer-implemented method according to the first aspect of the present invention, the hardware characteristics of the industrial hardware resource comprise a type of the hardware resource, a unique identifier of the hardware resource, operation parameters of the hardware resource and a momentary or predicted location of the hardware resource.

This has the advantage the matching becomes more efficient and transparent and allows to provide a more efficient and automatic access to the matching hardware resources.

In a further possible embodiment of the computer-implemented method according to the first aspect of the present invention, the hardware resource availability status of the industrial hardware resource comprises an availability for exclusive use, an availability for partial or shared use and/or an availability for a predefined time period.

This provides an addition degree of freedom in using the available hardware resources and consequently more flexibility of the computer-implemented method according to the present invention.

In a further possible embodiment of the computer-implemented method according to the first aspect of the present invention, the hardware resource availability status of an industrial hardware resource is updated automatically if the associated industrial hardware resource is selected by a client device of a searching user of the listed user group for getting access to the selected industrial hardware resource or if the use of the selected industrial hardware resource has terminated.

This increases the efficiency of the computer implemented method since already selected hardware resources are automatically filtered from the available hardware resources thus increasing the processing speed of the hardware matching.

In a further possible embodiment of the computer-implemented method according to the first aspect of the present invention, the client devices of the users are connected to the web application for message exchange of messages through a messaging system.

The provision of a dedicated messaging system with messages having a predefine message format increases the efficiency of data communication between the web application and the client devices.

In a further possible embodiment of the computer-implemented method according to the first aspect of the present invention, a client device of a user is registered in a sign-up procedure and stored as a data record in a user group list being associated with a specific topic and/or being associated with a specific organization.

This allows for a more focuses search of hardware resources and increases the security of the computer-implemented method against manipulation by third parties.

In a further possible embodiment of the computer-implemented method according to the first aspect of the present invention, the client device of the user comprises a user interface used for notification of matching results and/or for changing metadata of hardware resources.

This increases the transparency of selecting and matching of hardware resources.

In a further possible embodiment of the computer-implemented method according to the first aspect of the present invention, the user interface of the client device comprises a touch-sensitive graphical user interface for displaying matching results and/or for inputting user commands of a user, in particular for selecting a displayed matching hardware resource.

In a further possible embodiment of the computer-implemented method according to the first aspect of the present invention, a physical access to the matching industrial hardware resource is provided through automatic transport from a current location of the industrial hardware resource specified by the metadata included in the availability message received by the web application from a client device of a hardware owning user or from a software agent of the hardware resource to a target location specified in an inquiry message received by the web application from a client device of a searching user.

This allows for a faster automated transport of the matching hardware resource from the specified current location to the specified target location. Further the transport process of the hardware resource can be continuously monitored by the involved client devices.

In a further possible embodiment of the computer-implemented method according to the first aspect of the present invention, a client device of the searching user gets remote access to the matching industrial hardware resource through an access channel established by the web application between the searching user's client device and a software agent installed on the matching industrial hardware device or installed on an edge device connected to the industrial hardware resource via a data and control interface.

This has the advantage that no physical transport of the matching hardware resource is required and that the client device of the searching user gets immediate access to use or to test the matching hardware resource.

In a still further possible embodiment of the computer-implemented method according to the first aspect of the present invention, the industrial hardware resource comprises a technical device, in particular a machine, or a device component forming part of a technical device, in particular a processing resource, a storage resource or a transport resource.

The invention provides according to a further aspect a system for collaborative sharing of industrial hardware resources between users of a user group comprising the features of claim 17.

The invention provides according to the second aspect a system for collaborative sharing of industrial hardware resources between users of a user group, said system comprising a web application hosted on a cloud computer or hosted on an on-premise computer,
wherein the web application is adapted to receive inquiry messages from client devices of searching users indicating hardware resources required by searching users of the user group, and is adapted to receive availability messages from client devices of hardware owning users or from software agents of industrial hardware resources, said availability messages indicating hardware resources available by users of a user group list owning the available hardware resources, wherein the web application is further adapted to compare the required hardware resources with the available hardware resources to identify automatically matching hardware resources as matching results and to notify the client device of the searching user and the client device of the owning user about the matching result and to provide automatically access to use or to test the available matching hardware resource if the client device of the searching user and the client device of the owning user indicate consent to provide the access to the web application.

In a possible embodiment of the system according to a second aspect of the present invention, the searching user gets physical access to the matching industrial hardware resource through automatic transport by means of controlled or supervised transport facilities from a current location of the industrial hardware resource specified by the metadata included in the availability message to a target location specified in an inquiry message received by the web application from a client device of the searching user.

In a further alternative embodiment of the system according to the second aspect of the present invention, the client device of the searching user gets remote access to the matching industrial hardware resource through an access channel established by the web application between the searching user's client device and a software agent installed on the matching industrial hardware device or installed on an edge device connected to the industrial hardware resource via a data and control interface.

In a still further possible embodiment of the system according to the second aspect of the present invention, the searching user's client device is adapted to perform a remote testing of an application program developed for the industrial hardware resource as a device under test, DUT, through the established remote access channel.

This increases the efficiency of testing a developed application program significantly.

In the following, possible embodiments of the different aspects of the present invention are described in more detail with reference to the enclosed figures.
- Fig. 1: shows a flowchart for illustrating a possible exemplary embodiment of a computer-implemented for collaborative sharing of industrial hardware resources between users of a user group according to the first aspect of the present invention;
- Fig. 2: shows a schematic block diagram for illustrating the operation of a computer-implemented method and system for collaborative sharing of industrial hardware resources between users of a user group according to the present invention;
- Fig. 3: shows a schematic diagram for illustrating the operation of a possible embodiment of the computerimplemented method and system for collaborative sharing of industrial hardware resources between users of a user group according to the present invention;
- Fig. 4: shows a further schematic diagram for illustrating a possible exemplary embodiment of a computerimplemented method and system for collaborative sharing of industrial hardware resources between users of a user group according to the present invention;
- Fig. 5: shows a signal diagram for illustrating a possible exemplary embodiment of the computer-implemented method and system for collaborative sharing of industrial hardware resources between users of a user group according to the present invention;
- Fig. 6: shows a flowchart for illustrating a possible exemplary use case scenario of a computer-implemented method and system for collaborative sharing of industrial hardware resources between users of a user group according to the present invention;
- Fig. 7: shows a further flowchart for illustrating a further use case scenario of a computer-implemented method for collaborative sharing of industrial hardware resources between users of a user group according to the present invention;
- Fig. 8: shows a further flowchart for illustrating a possible use case scenario for a computer-implemented method and system for collaborative sharing of industrial hardware resources between users of a user group according to the present invention.

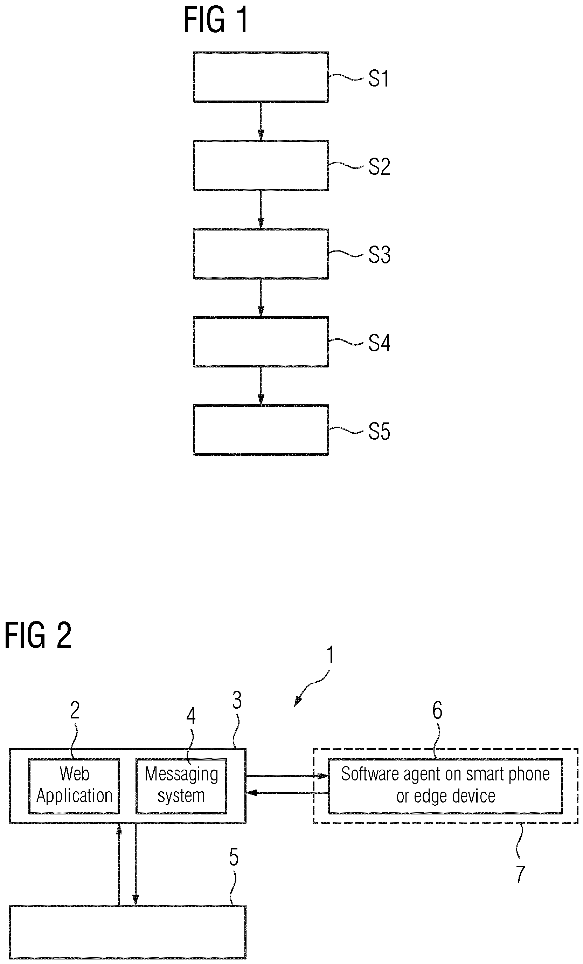

As can be seen in the flowchart of Fig. 1, the computer-implemented method for collaborative sharing of industrial hardware resources between users of a user group according to a first aspect of the present invention may comprise several main steps. In the illustrated exemplary embodiment, the method comprises five main steps S1 to S5.

In a first step S1, a web application 2 running on a platform 3 of a system 1 receives inquiry messages from client devices 5 of searching users indicating hardware resources 7 required by searching users. The users can be listed in a stored user list of a specific user group.

In a further step S2, the web application 2 receives availability messages from client devices 5 of hardware owning user or from software agents 6 of industrial hardware resources 7. The availability messages indicate hardware resources 7 available at users of the user group owning the available hardware resources 7.

In a further step S3, the web application 2 compares the required hardware resources 7 with available hardware resources 7 to identify automatically matching hardware resources 7 as matching results.

In a further step S4, the client device 5 of the searching user and the client device 5 of the owning user are notified by the web application 2 about a matching result indicating a matching hardware resource 7.

In a further step S5, the client device 5 of the searching user is provided with remote access to use the matching hardware resource 7 or with an indication how the searching user can get physical access to the matching hardware resource 7 if the client device 5 of the searching user and the client device 5 of the hardware owning user indicate both simultaneously consent to provide the respective access to the web application 2. A possible use includes also the use of the matching hardware resources 7 for testing purposes, in particular for testing a software program written by a software engineer for the specific hardware resources 7.

In a possible embodiment of the computer-implemented method illustrated in the flowchart of Fig. 1, the web application 2 receives in step S2 an availability message provided by a software agent 6. This software agent 6 can be installed in an industrial hardware resource 7 or can be installed on an edge device connected through an interface to an industrial hardware resource 7. Further, it is possible that the web application 2 receives in step S2 the availability message from a client device 5 of a user owning the respective industrial hardware resource 7. In a preferred embodiment, the availability message is generated automatically by the installed software agent 6 if at least one predefined availability condition is fulfilled by the associated industrial hardware resource 7. In a possible embodiment, the availability condition can comprise for instance excess of a predefined time limit where the respective industrial hardware resource 7 has not been sufficiently used by the user owning the respective industrial hardware resource 7. For instance, if a user has not used the industrial hardware resource 7 owned by him for a predefined time period such as a week or a month, a corresponding availability condition is fulfilled and an associated availability message can be generated automatically by a software agent 6 installed on the respective industrial hardware resource 7. The generation of the availability message is triggered automatically, if a corresponding availability condition is fulfilled. Further, the generated availability message can be automatically sent or supplied to the web application 2 for comparison with inquiry messages.

In a possible embodiment, the availability message provided the software agent 6 installed on the industrial hardware resource 7 or installed on an edge device connected through an interface to the respective industrial hardware resource 7 can comprise a status indication indicating a hardware resource availability status of the respective hardware resource 7. The availability message can comprise in a possible embodiment metadata which specify hardware characteristics of the respective industrial hardware resource 7 and/or which indicate a hardware resource availability status of the respective industrial hardware resource 7.

In a possible embodiment, the hardware characteristics specified by the metadata of the availability message can for instance comprise a type of the hardware resource 7, a unique identifier of the hardware resource 7, operation parameters of the hardware resource 7 and/or a momentary or predicted location of the hardware resource 7. The hardware characteristics specified by the metadata of the message can vary widely depending on the use case.

The hardware resource availability status of the industrial hardware resource 7 specified by the metadata of the message can comprise in a possible embodiment an availability of the hardware resource 7 for exclusive use by a single user, an availability for partial or shared use, for instance a shared use of the searching user and the owning user, and/or an availability of the hardware resource 7 for a predefined time period, for instance a specific date within a week.

In a preferred embodiment of the computer-implemented method according to the present invention, the hardware resource availability status of the industrial hardware resource 7 can be updated automatically if the associated industrial hardware resource 7 is selected by the client device of a searching user of the specific user group for getting access to the selected industrial hardware resource 7 or if termination of the use of the selected industrial hardware resource 7 is indicated by the client device 5 of the searching user to the web application 2.

The client devices 5 of the searching and owning user can be connected to the web application 2 for message exchange of messages through a messaging system 4. In a preferred embodiment, a user is registered in a sign-up procedure to a user group being associated to a specific topic or associated with a specific organization such as a corporation.

The web application 2 provides a transparent view of the momentary status of any hardware resource 7 and allows users to borrow, use or test available hardware resources 7. The hardware resources 7 can refer to any kind of machines, production machines or IT assets used in organizations. The industrial hardware resource 7 can comprise a technical device, in particular a machine, but also a device component forming part of a technical device, in particular a processing resource, a storage resource or a transport resource.

In a preferred embodiment, the user interface of a user's client device can comprise a touch-sensitive graphical user interface for displaying matching results on a display to the respective user. The touch-sensitive graphical user interface can also be used for inputting user commands of a user, in particular for selecting a displayed matching hardware resource 7 to establish access to the respective hardware resource 7. In step S4 of the computer-implemented method as illustrated in the flowchart of Fig. 1, the client devices 5 of the searching user and the owning user are notified about a matching result concerning a matching hardware resource 7. This matching result can be displayed on a display of the graphical user interface GUI of the client device 5. In a possible embodiment, a matching result with an associated matching hardware resource 7 are displayed to the searching user on the touch-sensitive graphical user interface of the searching user's client device 5 and to the owning user on the graphical user interface of the client device 5 of the owning user. Further, both users can input user commands into the touch-sensitive graphical user interface, in particular for selecting a displayed matching hardware resource 7.

In step S5, the searching user is provided with physical or remote access to use or test the matching hardware resource 7 if the searching user and the owning user both indicate consent to provide the respective access. This can be for instance achieved in that both users, i.e. the searching user and the owning user, perform a specific gesture or a specific movement of fingers on the touch-sensitive graphical user interface of the respective client device 5. The associated gesture or finger movement can be predefined and may vary depending on the use case.

Fig. 2 shows schematically a possible exemplary embodiment of a system 1 for collaborative sharing of industrial hardware resources 7 between users of a user group. The system illustrated in Fig. 2 is capable of performing the computer-implemented method as illustrated in the flowchart of Fig. 1.

A web application 2 can be hosted on a platform 3 as shown in Fig. 2. The platform 3 can comprise a cloud computer or an on-premise computer. The platform 3 can also host a messaging system 4 for exchanging messages between different entities of the system 1. The web application 2 is adapted to receive inquiry messages from client devices 5 of searching users indicating hardware resources 7 required by the searching users of the predefined user group. The web application 2 hosted on the platform 3 is further adapted to receive availability messages indicating hardware resources 7 available from users of the user group owning the available hardware resources 7. These availability messages can be provided in a possible embodiment from a software agent 6 installed on a hardware resource 7 as illustrated in Fig. 2. The web application 2 is adapted to compare the required hardware resources 7 indicated in the received inquiry messages with the available hardware resources 7 indicated in the received availability messages to identify automatically matching hardware resources 7 as matching results and to notify both the client device of the searching user and of the hardware owning user about the matching result and about the associated hardware resource 7. Further, the web application 2 can provide the client device 5 of the searching user automatically with access to use or to test the available matching hardware resource 7 or provide the client device 5 of the searching user with access information data including information about the location of the hardware resource 7 and/or including information of a communication address for communicating directly with the client devices 5 of the hardware owning user after the client device 5 of the searching user and the client device 5 of the hardware owning user have both indicated their consent to provide the respective hardware access to the web application 2.

In a possible embodiment, the hardware resource 7 can comprise a mobile hardware resource which can be transported from a current location to a target position. In a possible embodiment, the client device 5 of the searching user gets physical access to the matching industrial hardware resource 7 through an automatic transport from a current location of the industrial hardware resource 7 specified by the metadata included in the availability message to a target location input by the searching user through the user interface of the searching user's client device 5 and supplied by the client device 5 of the searching user to the web application 2. In a possible implementation, the transport from the current location of the hardware resource 7 to the specified target location can be supervised by the web application 2. For instance, a mobile IT asset such as a laptop can be transported from a workplace of the owning user to a workplace of the searching user within a building such as an office building. In a more complex use scenario, the mobile hardware resource 7 can be transported from a production facility at a first address to another remote production facility at a second address. In a possible implementation, the hardware resource 7 comprises a mobile device including a GPS module allowing to keep track of the current position or location of the hardware resource 7 from the initial location to the target location. In a possible embodiment, the web application 2 provides supervision of the transport process of the movable hardware resource 7 and may notify the searching user and the owning user continuously about the momentary position of the transported hardware resource 7. In this way, the searching user is notified about the expected arrival time of the industrial hardware resource 7 at his location or any other location indicated by the searching user in the metadata of the inquiry message.

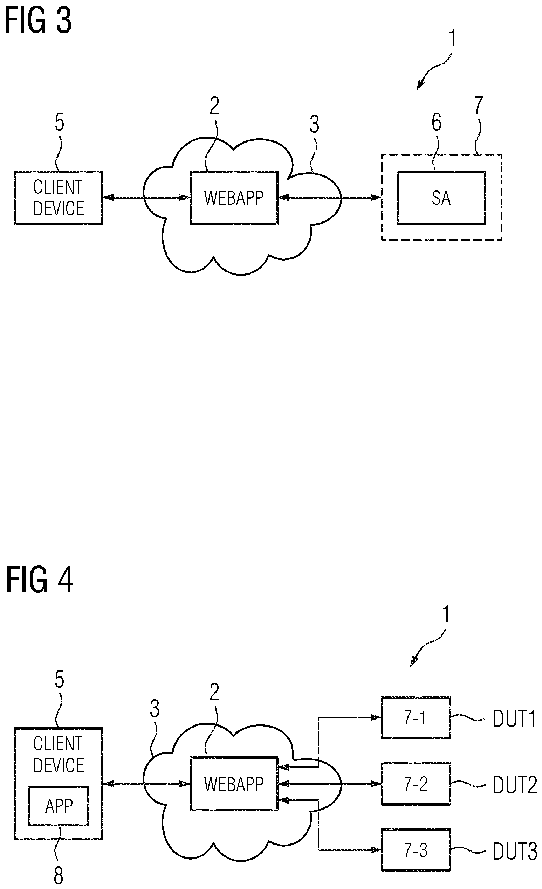

In a further possible embodiment of the system 1 according to the present invention, the searching user gets remote access to the matching industrial hardware resource 7 through an access channel as illustrated schematically in Fig. 3. The remote access channel is established by the web application 2 hosted on the cloud computer or the on-premise computer between the searching user's client device 5 and a software agent 6 installed on the matching industrial hardware resource 7-i or installed on an edge device connected to the respective hardware resource 7-i via a local data and control interface. In the illustrated example of Fig. 3, the remote access channel is established by the web application 2 between the client device 5 and the hardware resource 7-i. The hardware resources 7-i illustrated in Fig. 3 may comprise hardware resources 7-i which cannot be transported easily such as production machines or other manufacturing facilities.

In a further possible embodiment of the system 1 according to the present invention, a searching user's client device 5 can get access to a plurality of industrial hardware resources 7-1, 7-2, 7-3 for testing purposes as illustrated schematically in Fig. 4. In this embodiment, the different industrial hardware resources 7-i act as devices under test (DUT) accessible by the client device 5 of the searching user. In a possible embodiment, an application program 8 which has been developed by a software developer requires testing on a plurality of similar hardware resources 7-i such as user smartphones or other more specific devices including measurement equipment. In such a testing scenario, it often happens that a software developer develops a specific application program 8 for a specific type of devices. The developed application program 8 requires extensive testing on the corresponding hardware resources 7-i. To achieve good test results, a high number of hardware resources 7-i to be tested is required. Further, the hardware resources 7-i may vary slightly depending on the operation lifetime or hardware characteristics. The computer-implemented method and system 1 according to the present invention can provide a client device 5 of a searching user such as a software engineer with access to test a group of matching hardware resources 7-i if the client device 5 of the searching user and the client devices 5 of the hardware owning users or the software agents 6 of the hardware resources 7 indicate consent to provide the testing access to the web application 2. In a possible embodiment, the testing of the different hardware resources 7-i can be performed simultaneously and even synchronized to each other. This allows to compare instantaneously the operation behavior of the different hardware resources 7-i forming the devices under test DUT when executing the application program 8. It is also possible that the hardware resources 7-i forming the devices under test (DUT) can be tested independently from each other to observe and register their operation behavior when executing the developed application program 8.

The web application 2 illustrated in Fig. 2 can be run in a possible implementation on a centralized server or on a cloud (Ex:AWS) machine. In a possible implementation, the web application 2 can comprise a list of all available hardware resources 7-i such as machines and their corresponding availability status. The web application 2 allows users to sign up and to search for specific hardware resources 7-i having specific hardware characteristics. Users can belong to a specific closed user group, for instance users working at the same company. Users can register in a sign-up procedure to a user group associated with a specific organization such as a company or associated with a specific topic, for instance a specific scientific topic. Network addresses of client devices 5 of the registered users can be stored in a user group address list. The web application 2 allows client devices 5 of users specified in the user group list to request hardware resources 7-i from a current owner of the hardware resource 7. The hardware resource 7 of the hardware owner can be indicated in the hardware resource availability status as being available for an exclusive use or as being available for a partial or a shared use. Further, the availability can specify a predefined time period for exclusive or partial use. Users having registered to the user group can in a possible embodiment add additional hardware resources 7-i to a list of available hardware resources 7-i. Further, the users can in a possible embodiment update the status of the hardware resources 7-i and directly suggest the hardware resources 7-i to other users of the user group. The web application 2 can suggest hardware resources 7-i to searching users who are looking for hardware resources 7-i.

The client device 5 of a searching user can be supplied with a list of suitable available hardware resources 7-i matching his inquiry. The list can be sorted according to a metric calculated by the web application 2 based on metadata. The metadata may also comprise a rate or tariff for borrowing the hardware resource 7. Further users may be rated by other users to create automatically additional metadata describing the reliability and trustworthiness of a participating user. A searching user can select via the graphical user interface GUI of the client device 5 from all suggested hardware resources 7-i sorted in the list a specific available hardware resource 7 fitting best his personal requirements or needs.

The software agent 6 illustrated in the schematic diagram of Fig. 2 can comprise a software component that is installed on a hardware resource 7 itself or on an edge device connected to a hardware resource 7 via a control and data interface. The software agent 6 can update the status of the associated hardware resource 7 periodically and can inform the web application 2 about the current hardware resource status, in particular about the status of its availability. Both the web application 2 and the software agent 6 can allow a creation of custom status and custom rules thus identifying or defining a status of the hardware resource 7.

In a possible embodiment, the collaborative sharing application 2 can be executed on a client device 5 of a searching user and/or on a client device 5 of an owning user allowing to look for matching results. Hardware characteristics of the industrial hardware resource 7 can comprise a type of the hardware resource 7, for instance indicating whether the hardware resource 7 is a laptop, a smartphone, a manufacturing machine, etc. Further, in a possible embodiment, each hardware resource 7 of an organization such as a company can be associated with a unique identifier in an extensive inventory list of all available hardware resources 7-i within the organization. Other characteristics can also indicate operation parameters of the hardware resources 7-i, in particular capabilities and skills of the hardware resource 7 required for performing technical tasks.

The software agent 6 of a hardware resource 7 such as a production machine may provide in a possible embodiment in an availability message indicating the availability of the production machine also unique identifiers of other associated hardware resources 7 within the user group or organization such as accessory devices, e.g. available tools which can be fixed on this production machine. In this way a searching user can be supported by the web application 2 in collecting a group of available hardware resources 7 necessary for performing a specific technical task. For instance a searching user can find an available production machine at a first user owning the production machine and can get a fitting tool for this production machine from a second user owning the fitting tool. The inventory list of available hardware resources can be stored in a database accessible to the web application 2. The stored inventory list can comprise metadata describing the available hardware resources 7 and its owner as well as unique identifiers of these hardware resources 7. Further the stored inventory list may indicated for a hardware resource 7 also identifiers of associated fitting hardware resources 7 which may be owned by the same user or by other users of the user group.

In a still further possible embodiment, the hardware characteristics taken into account for finding matching results can comprise a momentary location or position of the hardware resource 7. The location may comprise an address or even specific location coordinates provided by a GPS module of the hardware resource 7. A location of an available hardware resource 7 can be input in a possible embodiment by the owning user through a user interface of the client device 5 of the owning user. Alternatively, the software agent 6 installed on the hardware resource 7 or installed on an edge device connected to the hardware resource 7 may indicate the momentary location of the hardware resource 7 and provide the web application 2 with the current location of the hardware resource 7. In a possible embodiment, not only the current location of the hardware resource 7 but also the momentary position of the owner of the hardware resources 7 is taken into account when calculating a matching result by the web application 2. This is in particular relevant if the transfer or transport of the hardware resource 7 from the owning user to the searching user requires physical presence of the owning user or a manual transfer of the transportable hardware resource 7. If both users, the searching user and the owning user, work for instance at the same facility of the company, a transfer of the available industrial hardware resource 7 from the owning user to the searching user can be easily achieved manually after both users indicate their consent to provide the transfer of the mobile hardware resource 7.

The web application 2 for performing the collaborative sharing of industrial hardware resources 7 between users of the user group can be installed in a possible embodiment on the client device 5 of both users, on the client device 5 of the searching user and/or on the client device 5 of the owning user. In a possible embodiment, the client device 5 of a searching user can place an inquiry message in the system 1 and wait until it is notified by the web application 2 about a matching result, for instance for a fitting manufacturing machine such as 3D printer. Typically, the client device 5 of a searching user can receive several matching results illustrating different available hardware resources 7-i matching the hardware characteristics indicated in the inquiry message. A list of available fitting hardware resources 7 can be displayed on a graphical user interface to the client device 5 of the searching user. The list can be sorted according to a calculated metric indicating a relevance of the hardware resource for the search. The searching user can look through the displayed available hardware resources 7 and may perform a gesture with his fingers such as a swiping movement. For example, in a possible implementation, the searching user can swipe up if he is interested in getting access to the displayed hardware resource 7. In contrast, the searching user can express that he is not interested in the displayed hardware resource 7 by a downside swiping movement of his fingers on the touch-sensitive graphical user interface GUI of his client device 5.

The application for collaborative sharing of industrial hardware resources 7 can also be installed on the providing partner's side, i.e. on the client device 5 of the owning user. The owning user can look for potential users of the hardware resource 7 owned by the owning user. It is possible that the client device 5 of the owning user gets a list of client devices 5 of searching users who are interested in the hardware resource 7 offered by the owning user along with network addresses of the client devices 5 of the hardware owning users. The owning user may perform a gesture with his fingers on the touch-sensitive graphical user interface of his client device 5 to express whether he is willing to provide remote or physical access to the searching user for his hardware resource 7. For instance, the owning user may perform an upside gesture with his fingers on the touch-sensitive graphical user interface of his client device 5 to express his intention to provide access for a specific user to the hardware resource 7 owned by the owning user. In contrast, the owning user can express with a downside gesture or swipe that is not interested to provide access to his owned hardware resource 7 to the searching user.

In a preferred embodiment, only if both users express their consent to provide access to the respective hardware resource 7, the client devices 5 of both users transmit a consent indication message to the web application 2. Further contact information messages can be directly exchanged between the client devices 5 of the searching and hardware owning user. For instance, if both parties or users have performed a swipe-up gesture on the graphical user interface GUI of their client device 5, contact information can be automatically exchanged by the system 1.

The system 1 according to the present invention can be used in a huge variety of different industrial use cases and un-derutilized hardware resources 7 can made be available and be reused for other workloads. Hardware resources 7 can for instance comprise machines in an assembly line of a production facility which are momentarily not used to their full capacity. The hardware resource availability status of such an industrial hardware resource 7 is updated in a preferred embodiment automatically if the associated industrial hardware resource 7 is selected by a client device 5 of a searching user to perform a workload or if the use of the selected industrial hardware resource 7 by the searching user has terminated. In a possible embodiment, the software agent 6 can instantly update the status of the associated hardware resource 7. The software agent 6 may indicate the availability of the associated hardware resource 7 by signaling the possibility to run other workloads on the associated hardware resource 7, in particular a machine on a factory shop floor.

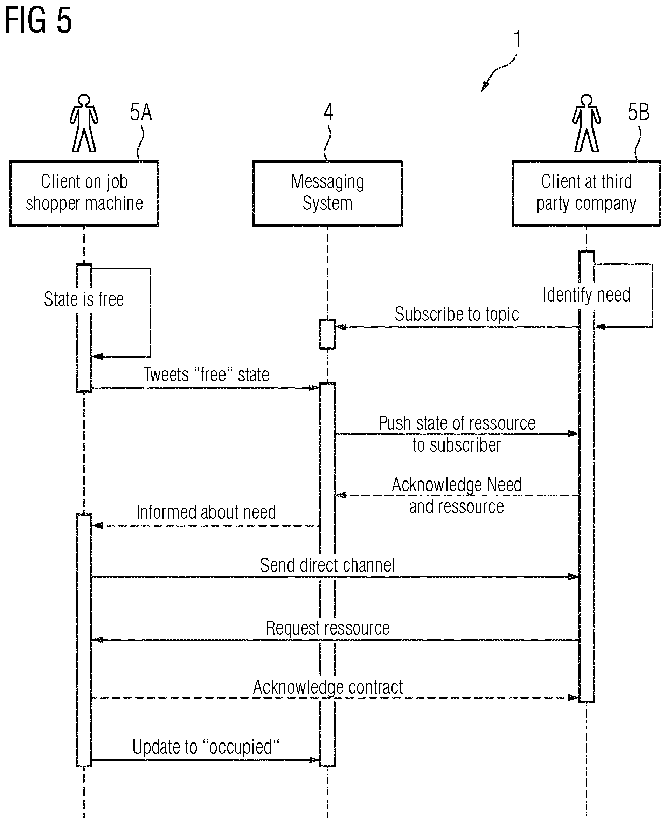

Fig. 5 illustrates a possible exemplary embodiment of a system 1 according to the present invention where messages are exchanged by a messaging system 4 hosted on the platform 3 between a client device 5B of a searching user and a client device 5A of a user owning a hardware resource 7. The searching user may be for instance a user of another company outside the organization. The client device 5A of the hardware owning user can specifically offer his hardware resource 7 to other companies by tweeting in an availability message a current state of the hardware resource 7 or machine for getting orders if the state of the hardware resource 7 is "free". On the other hand, the third party companies can actively look for available "free" machines throughout different job shoppers who may place their orders. For this, the searching user can subscribe through his client device 5B to a certain topic on a broker platform to get informed about all relevant hardware resources 7 or machines being available to perform the required work tasks. Based on the incoming availability messages, a client device 5B of a searching user can decide to book an available free machine and to make use of it for production purposes. In a possible embodiment, the client device 5B of a searching user can additionally get remote access to the production machine and perform remote control of the production steps performed by the production hardware resource 7 through an established remote access channel as illustrated schematically in Fig. 3.

In the illustrated exemplary implementation of Fig. 5, the messaging system 4 of the system 1 can push a state of the hardware resource 7 to the client device 5B of the searching user having subscribed to the specific topic. After having received the information about the available hardware resource 7, the client device 5B of the searching user can acknowledge a need for the hardware resource 7 by transmitting a corresponding message to the messaging system 4. The messaging system 4 can inform the client device 5A of the hardware owning user about the expressed need indicated in the inquiry message generated by the client device 5B of the searching user. After this, a direct communication channel can be established by the messaging system 4 between the client device 5A of the owning user and the client device 5B of the searching user. After the communication channel has been established, the client devices 5A,5B of both users can exchange additional information about the intended use access.

In a possible implementation, the client device 5B of the searching user can send a request to the client device 5A of the owning user which acknowledges the access contract to the client device 5B of the searching user as illustrated schematically in Fig. 5. After this has been accomplished, the hardware resource 7 of the owning user is no longer available to other users and the hardware resource availability status of the hardware resource 7 is updated automatically by the client device 5A of the hardware owning user or by the software agent 6 of the hardware resource 7 to the status "occupied" as shown in Fig. 5.

In a further possible embodiment, after the messaging system 4 has set up the collaborative hardware resource sharing, additionally a physical remote control access channel between the client device 5b of the searching user and the client device 5A or edge device of the hardware resource 7 can be established to provide direct remote control access to the hardware resource 7 or machine by the client device 5B of the searching user as illustrated schematically in Fig. 3. This allows the client device 5B of the searching user to control directly production or manufacturing steps at the production machine forming a controllable hardware resource 7 which may be located in another location or production facility. Through the established remote access channel, control signals and measurement or sensor data can be transported.

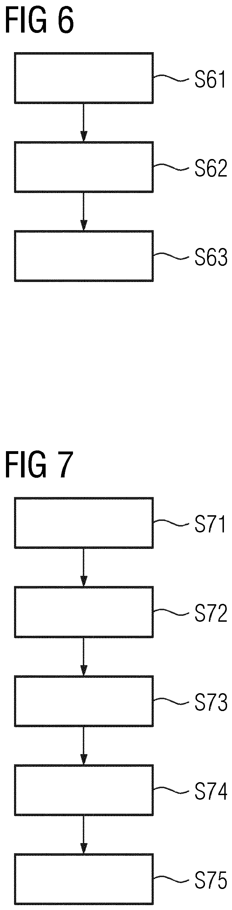

Fig. 6 illustrates schematically a possible use case scenario for the method and system 1 according to the present invention. In the illustrated example, a software agent 6 can be installed on a hardware resource 7 or machine in a shop floor. In step S61, a software agent 6 can identify a low utilization of the respective hardware resource or a machine 7 it is hosted on. For instance, if the machine or hardware resource 7 is used for less than 10% of its production capacity in the last month.

In a further step S62, the software agent 6 hosted on the machine 7 or hosted on an edge device connected to the machine 7 can notify the hardware status information to the web application 2 hosted on the platform 3. In this embodiment, the web application 2 receives an availability message indicating the availability of the production machine for production purposes.

The available machine 7 is listed in step S63 on the web application 2 along with suitable metadata. Metadata can specify hardware characteristics of the industrial machine such as the type of the machine or operation parameters of the machine. Metadata may also indicate a current location of the machine. The software agent 6 connected to the hardware resource or machine 7 can check in a possible embodiment the device's utilization for a predefined period. If the utilization of the machine 7 is lower than expected the software agent 6 of the machine 7 can update the hardware resource status to "low utilization". Any other user having subscribed to the system 1 and is looking for a corresponding production resource can now find this status hosted in the web application 2. The searching user can reach out to the owning user of the machine 7 to get access to the machine 7 to run his workload. The machine 7 can be any kind of production machine or any kind of data processing machine such as a server. In general, hardware resources 7 can comprise a manufacturing resource or a data processing resource. Further, the hardware resource can also comprise a storage resource, in particular a data storage resource for storing data. Hardware resources 7 may also comprise other kinds of resources, in particular transport resources. These transport resources can comprise physical transport resources for transporting physical entities from a current location to a target location but also data transport resources in a data transport medium, in particular data channels or frequency bands of a data communication link.

Fig. 7 shows a further flowchart for illustrating a possible use case scenario of the computer-implemented method and system 1 according to the present invention. In the illustrated embodiment, a user gets access to the web application 2 for searching hardware resources 7.

In step S71, the client device of a user searches for required hardware resources 7 in the web application platform 3. The client device 5 of the searching user may for instance search for a specific augmented reality (AR) or virtual reality (VR) device.

In step S72, the web application 2 matches the request for available hardware resources 7 based on matching parameters, for instance based on the location or other hardware characteristics of the hardware resources 7. The web application 2 can compile a list of suitable hardware resources 7 matching the inquiry of the client device 5 of the searching user.

In step S73, the web application 2 provides the client device 5 of the searching user with a list of suitable hardware resources 7 with their current associated status such as "not available", "available for borrowing", "available for shared use", etc.

In a further step S74, the searching user selects a fitting hardware resource 7 displayed on the graphical user interface GUI of the client device 5 and may express interest by performing a predefined finger gesture such as a swiping-up movement. The selection can also be performed by a selection filter of the client device 5 configured by the searching user through the Graphical user interface of the client device 5 of the searching user.

In a further step S75, the client device 5 of the hardware owner of the searching hardware resource 7 gets notified by the web application 2. If also the hardware owner of the hardware resource 7 such as the owner of an augmented reality (AR) device agrees to provide access to the hardware resource 7, the current status of the hardware resource 7 is updated automatically and the client device 5 of the interested searching user is informed accordingly.

In a further use case scenario, a searching user such as an employee of an organization may acquire a new hardware resource 7 such as a laptop. In this context, the previously used laptop of the employee is no longer required by the employee and becomes "available" for third parties. The employee can now indicate the availability of his old laptop to trigger the generation of a corresponding availability message by his client device 5. The old laptop can now be offered through the web application platform 3 to interested parties such as working students or any other employee of the company who needs such a laptop. In another scenario, when a hardware device such as a laptop does no longer show the required operation performance or may have completely failed, the hardware resource 7 can be offered through the platform 3 by the client device 5 of the owning user with additional status information indicating the need for repair or by updating the status to "complicated". This creates a transparent view to a group of users regarding the momentary status of the hardware resource 7.

In a further possible use case scenario, an assembling line of a production facility can contain a CNC milling machine and a 3D printer device. In a possible embodiment, the machines cannot be fully utilized but a different department within the organization is looking for such kinds of machines to handle their workloads. In this scenario, the software agent 6 of the machine or a software agent 6 of the complete assembling line may suggest the available machines to other users of the user group for utilization in an availability message.

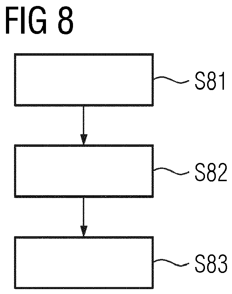

As illustrated in the flowchart of Fig. 8, a user being a hardware owner may get access to the web application 2. The client device 5 of a hardware owner can add in step S81 information about the hardware by enriching the availability message with metadata. The metadata may for instance indicate the location, hardware specification and hardware characteristics of the respective hardware resource 7. The hardware characteristics may for instance indicate the CPU performance or processing capabilities of the hardware resource 7 or the available run data storage capacity of the hardware resource 7. Further, the availability status of the hardware resource 7 in question may indicate that the hardware resource 7 is available for borrowing or available for a predefined time period. As soon as a client device 5 of an interested searching user requests this kind of hardware resource 7, the client device 5 of the hardware owner of the hardware resource 7 can be notified in step S82 as shown in Fig. 8.

If the client device 5 of hardware owner indicated consent to lend the hardware resource 7, the current status of the hardware resource 7 is automatically updated and the client device 5 of the interested searching user is informed accordingly in step S83.

The computer-implemented method and system 1 can be used for collaborative sharing of any kinds of industrial hardware resources 7 between users of a user group, in particular between users working in the same company. The computer-implemented method and system 1 can also be used for collaborative sharing of industrial hardware resources 7 between users or employees of different companies or organizations, in particular for collaborative sharing of industrial hardware resources 7 for manufacturing facilities and other organizations, for instance start-up companies requiring prototyping or testing possibilities.

## Claims

1. A computer-implemented method for collaborative sharing of industrial hardware resources (7) between users of a user group,
the method comprising the steps of:
- receiving (S1) by a web application (2) inquiry messages from client devices (5) of searching users indicating hardware resources (7) required by searching users of the user group;
- receiving (S2) by the web application (2) availability messages from client devices (5) of hardware resource owning users or from software agents (6) of industrial hardware resources (7), said availability messages indicating hardware resources (7) available at users of the user group owning the available hardware resources (7);
- comparing (S3) by the web application (2) the required hardware resources (7) with the available hardware resources (7) to identify matching hardware resources (7) as matching results;
- notifying (S4) the client device (5) of a searching user and the client device (5) of an owning user of a matching hardware resource (7) about the matching result; and
- providing (S5) the client device (5) of the searching user with access to use or with access to test the matching hardware resource (7) if the client device (5) of the searching user and the client device (5) of the owning user indicate consent to provide the access.

2. The computer-implemented method according to claim 1 wherein the web application (2) receives an availability message provided by a software agent (6) installed in an industrial hardware resource (7) or installed on an edge device connected through an interface to an industrial hardware resource (7) and/or from a client device (5) of a user owning the industrial hardware resource (7).

3. The computer-implemented method according to claim 2 wherein the availability message is generated automatically by the software agent (6) if at least one predefined availability condition is fulfilled by the associated industrial hardware resource (7).

4. The computer-implemented method according to claim 3 wherein the availability condition comprises excess of a predefined time limit where the respective industrial hardware resource (7) has not been sufficiently used by the user owning the respective industrial hardware resource (7).

5. The computer-implemented method according to any of the preceding claims 2 to 4 wherein the availability message provided by the software agent (6) installed in the industrial hardware resource (7) or installed on the edge device connected through an interface to the industrial hardware resource (7) comprises a status indication indicating a hardware resource availability status of the respective hardware resource (7).

6. The computer-implemented method according to any of the preceding claims 1 to 5 wherein the inquiry message and/or the availability message comprise metadata which specify hardware characteristics of the respective industrial hardware resource (7) and/or specify characteristics of the user of the client device and/or which indicate a hardware resource availability status of the respective industrial hardware resource (7).

7. The computer-implemented method according to claim 6 wherein hardware characteristics of the industrial hardware resource (7) comprise
a type of the hardware resource,
a unique identifier of the hardware resource,
operation parameters of the hardware resource and
a momentary or predicted location of the hardware resource.

8. The computer-implemented method according to any of the preceding claims wherein the hardware resource availability status of the industrial hardware resource (7) comprises
an availability for exclusive use,
an availability for partial or shared use and/or
an availability for a predefined time period.

9. The computer-implemented method according to any of the preceding claims wherein the hardware resource availability status of an industrial hardware resource (7) is updated automatically if the associated industrial hardware resource (7) is selected by a client device (5) of a searching user of the user group for getting access to the selected industrial hardware resource (7) or if the use of the selected industrial hardware resource (7) has terminated.

10. The computer-implemented method according to any of the preceding claims wherein the client devices (5) of the users are connected to the web application (2) for message exchange of messages through a messaging system (4).

11. The computer-implemented method according to any of the preceding claims wherein a client device (5) of a user and user specific data is registered in a sign-up procedure and stored as a data record in a user group list being associated with a specific topic and/or being associated with a specific organization.

12. The computer-implemented method according to any of the preceding claims wherein the client device (5) of the user comprises a user interface used for notification of matching results and/or used for changing metadata of hardware resources (7).

13. The computer-implemented method according to claim 12 wherein the user interface of the client device (5) comprises a touch-sensitive graphical user interface for displaying matching results and/or for inputting user commands of a user into the client device (5), in particular for selecting a displayed matching hardware resource (7).

14. The computer-implemented method according to any of the preceding claims wherein a physical access to the matching industrial hardware resource (7) is provided through automatic transport from a current location of the industrial hardware resource (7) specified by the metadata included in the availability message received by the web application (2) from a client device (5) of a hardware resource owning user or from a software agent(6) of the industrial hardware resource(7) to a target location specified in an inquiry message received by the web application (2) from a client device (5) of a searching user.

15. The computer-implemented method according to any of the preceding claims 1 to 13 wherein the client device (5) of the searching user gets remote access to the matching industrial hardware resource (7) through an access channel established by the web application (2) between the searching user's client device (5) and a software agent (6) installed on the matching industrial hardware resource (7) or installed on an edge device connected to the industrial hardware resource (7) via a local data and control interface.

16. The computer-implemented method according to any of the preceding claims wherein the industrial hardware resource (7) comprises a technical device, in particular a machine, or a device component forming part of a technical device, in particular a processing resource, a storage resource or a transport resource.

17. A system (1) for collaborative sharing of industrial hardware resources (7) between users of a user group,
said system comprising
a web application (2) hosted on a cloud computer or hosted on an on-premise computer,
wherein the web application (2) is adapted to receive inquiry messages from client devices (5) of searching users indicating hardware resources (7) required by searching users of the user group, and is adapted to receive availability messages from client devices (5) of hardware resource owning users or from software agents (6) of industrial hardware resources(7), said availability messages indicating hardware resources (7) available by users of the user group owning the available hardware resources (7),
wherein the web application (2) is further adapted to compare the required hardware resources (7) with the available hardware resources (7) to identify matching hardware resources (7) as matching results and to notify the client device (5) of the searching user and the client device (5) of the hardware owning user about the matching result and to provide automatically access to use or to test the available matching hardware resource (7) if the client device (5) of the searching user and client device (5) of the owning user indicate consent to provide the access to the matching hardware resource (7) to the web application (2).

18. The system according to claim 17 wherein a physical access to the matching industrial hardware resource (7) is provided through automatic transport from a current location of the industrial hardware resource (7) specified by the metadata included in the availability message to a target location specified on the inquiry or
wherein the client device (5) of the searching user gets remote access to the matching industrial hardware resource (7) through an access channel established by the web application (2) between the searching user's client device (5) and a software agent (6) installed on the matching industrial hardware device (7) or installed on an edge device connected to the industrial hardware resource (7) via a local data and control interface.

19. The system according to claim 18, wherein the searching user's client device (5) is adapted to perform a remote testing of an application program (8) developed for the industrial hardware resource (7) as a device under test, DUT, through the established remote access channel.
